# EUROPÄISCHE PATENTANMELDUNG

(11) **EP 1 818 467 A2**
(43) Veröffentlichungstag der Anmeldung: **15.08.2007**
(21) Anmeldenummer: 07008526.1
(22) Anmeldetag: 22.07.2004
(51) Int. Cl.: E04B 1/76

(54) **Dämmelement und Wärmedämmsystem**

(30) Priorität: 22.07.2003 DE 10333299
(62) Teilanmeldung aus: 04017338.7
(71) Anmelder: STO AG, D-79780 Stühlingen (DE)
(72) Erfinder: Grochal, Peter, Dr., 79761 Waldshut-Tiengen (DE); Zwerger, Markus, 79848 Bonndorf (DE); Klein, Hans, Dr., 79761 Waldshut-Tiengen (DE)
(74) Vertreter: Leinweber & Zimmermann

(57) **Zusammenfassung**

Die Erfindung betrifft ein Dämmelement zum Bereitstellen einer Dämmwirkung in einer Dämmrichtung mit einem von zwei etwa senkrecht zur Dämmrichtung verlaufenden Hauptflächen begrenzten Vakuum-Isolier-Paneel und mindestens einer auf einer der Hauptflächen des Vakuum-Isolier-Paneels befestigten, insbesondere aufgeklebten und im wesentlichen aus einem Dämmstoff bestehenden Dämmplatte, wobei in mindestens einem quer zu den Hauptflächen des Vakuum-Isolier-Paneels und vorzugsweise etwa parallel zur Dämmrichtung verlaufenden Rand der Dämmplatte eine sich quer, insbesondere etwa senkrecht zur Dämmrichtung erstreckende Profilierung zur Aufnahme eines Befestigungsabschnittes eines Befestigungselementes so gebildet ist, daß eine Projektion der Profilierung längs der Dämmrichtung zumindest abschnittweise auf einen Rand des Vakuum-Isolier-Paneels fällt.

## Beschreibung

Die Erfindung betrifft ein Dämmelement zum Bereitstellen einer Dämmwirkung in einer Dämmrichtung mit mindestens einem von zwei etwa senkrecht zur Dämmrichtung verlaufenden Hauptflächen begrenzten Vakuum-Isolier-Paneel und mindestens einer auf einer dieser Hauptflächen befestigten, insbesondere aufgeklebten, und im wesentlichen aus einem Dämmstoff bestehenden Dämmplatte sowie ein unter Verwendung eines derartigen Dämmelementes herstellbares Wärmedämmsystem.

Zum Zweck der Einsparung von für das Beheizen von Gebäuden benötigter Energie ist man bestrebt, Gebäude zu errichten, daß deren Außenwände eine möglichst niedrige Wärmeleitfähigkeit haben. Die Verwendung von Mauersteinen oder Wandelementen aus porösen Baustoffen, wie Ziegel oder Porenbeton, anstelle von Baustoffen aus einem dichten Material, wie etwa Beton, ist ein seit langem beschrittener Weg in diese Richtung. Wenn man mit derartigen Bauelementen aus porösen Baustoffen Außenwände von Gebäuden errichten will, welche die nach heutigen Maßstäben gewünschte, niedrige Wärmeleitfähigkeit aufweisen, sind Wände mit so großer Wandstärke erforderlich, daß der Grundstücksflächenverbrauch für das Gebäude und der Materialaufwand stark ansteigen.

Aus diesem Grund ist man dazu übergegangen, die Außenwände von Gebäuden mit einer zusätzlichen Wärmedämmung auszustatten. Derartige zur Wärmedämmung von Neu- und Altbauten einsetzbare Wärmedämmverbundsysteme werden beispielsweise in der DE 3 202 960 beschrieben. Herkömmliche Wärmedämmverbundsysteme besitzen etwa folgenden Aufbau:
Auf ein Mauerwerk wird mit einer Klebermasse eine Wärmedämmplatte, insbesondere aus expandiertem Polystyrol-Hartschaum, Mineralwolle oder Steinlamelle aufgebracht. Diese Wärmedämmplatte wird mit einer mehrlagigen armierten Putzbeschichtung, bestehend aus einer Armierungsschicht, die wiederum aus einer Armierungsmasse und einem Armierungsgewebe gebildet wird, und einer Deckbeschichtung aus einem mineralischen oder organisch gebundenen Putz, ggf. mit einem zusätzlichen Voranstrich auf der Armierungsschicht, vor Verwitterung geschützt.

Zum Erhalt einer besonders guten Wärmedämmung, wie sie z. B. bei Wandaufbauten für Passivhäuser benötigt wird, kann es notwendig sein, eine zweite Lage Wärmedämmplatten zu verlegen.

Bei derartigen Wärmedämmverbundsystemen ist es in einigen Fällen notwendig, Dämmstoffstärken von 20 cm oder mehr aufzubringen. Die so entstehenden Wandaufbauten führen zu optischen Beeinträchtigungen im Bereich der Fensteröffnungen (Schießscharteneffekt) und reduzieren die bei vorgegebener Grundfläche erreichbare nutzbare Wohnfläche. Dadurch erhöhen sich die Kosten pro Quadratmeter Wohnfläche deutlich.

Neben dem Einsatz herkömmlicher Wärmedämmaterialien, wie Polystyrol, Mineralwolle, Steinlamelle und Mineralschaum werden auch evakuierte Dämmelemente eingesetzt, welche die minimierte Wärmeleitfähigkeit eines evakuierten Volumens nutzen, ähnlich wie bei herkömmlichen Thermoskannen.

Ein derartiges Vakuum-Wärmedämmelement, im folgenden auch als Vakuum-Isolier-Paneel bezeichnet, ist beispielsweise in der DE 297 11 769 angegeben. In dieser Schrift sind Wärmedämmelemente mit zwei in Dämmrichtung beabstandeten Wänden beschrieben, zwischen denen ein möglichst geringer Gasdruck (Vakuum) herrscht, wobei diese Wände durch einen Feststoffkörper mit geringem spezifischen Gewicht auf Abstand gehalten werden und der Feststoffkörper von einer dem Druckausgleich entgegenwirkenden Folie dicht umschlossen ist. Der Offenbarungsgehalt der DE 297 11 769 hinsichtlich der Konstruktion und Herstellung von Vakuum-Isolier-Paneelen wird hiermit durch ausdrückliche Inbezugnahme in diese Beschreibung aufgenommen.

In der DE 100 59 453 A sind "Verfahren zur Herstellung eines evakuierten Dämmelementes" beschrieben, mit denen der in der DE 297 11 769 beschriebene Aufbau von Vakuum-Isolier-Paneelen durch ein kraftschlüssiges Verkleben der Folie mit Kern- und Stützteilen optimiert werden kann. Der Offenbarungsgehalt der DE 100 59 453 A hinsichtlich der Herstellung und des Aufbaus von Vakuum-Isolier-Paneelen wird hiermit ebenfalls durch ausdrückliche Inbezugnahme in diese Beschreibung aufgenommen.

Als geeignete Materialien für den Kern werden in der EP 0 892 120 A2 Blähglas und/oder Schaumglas genannt, wobei vermehrt offenzelliger, extrudierter Polystyrol- bzw Polyurethanschaum und pyrogene Kieselsäure verwendet werden. Auch der Offenbarungsgehalt der EP 0 892 120 A2 wird hiermit hinsichtlich des Aufbaus von Vakuum-Isolier-Paneelen durch ausdrückliche Inbezugnahme in diese Beschreibung aufgenommen.

An die Gasdichtigkeit der bei der Herstellung von Vakuum-Isolier-Paneelen zum Einsatz kommenden Folien werden besondere Anforderungen gestellt. In der DE 199 15 311 werden Vakuum-Isolier-Paneele beschrieben, welche aus mindestens sieben Schichten gebildete Kunststoffolien aufweisen. Auch der Offenbarungsgehalt der DE 199 15 311 wird hiermit hinsichtlich der Konstruktion von Vakuum-Isolier-Paneelen durch ausdrückliche Inbezugnahme in diese Beschreibung aufgenommen.

Nachteilig an den bekannten Vakuum-Isolier-Paneelen ist deren leichte Verletzbarkeit bzw. deren geringer Schutz gegen Beschädigungen. Daher sind derartige Paneele bei der Herstellung von Wandaufbauten mit geringen Wärmeleitfähigkeiten nur eingeschränkt einsetzbar. Der Einsatz der genannten Vakuum-Isolier-Paneele für die Wärmedämmung an Gebäudefassaden wird beispielsweise in dem vom Bayrischen Zentrum für Angewandte Energieforschung e.V. veröffentlichten Aufsatz "Erstmalige Sanierung einer denkmalgeschützten Fassade mit Vakuumdämmung" beschrieben. Bei dem in dieser Schrift beschriebenen Dämmsystem werden zunächst die Vakuum-Isolier-Paneele an der Gebäudefassade befestigt und dann mit Putzträgerplatten aus XPS-Schaum gesichert. Diese Vorgehensweise hat sich allerdings als problematisch erwiesen, weil es bei der Anbringung der Vakuum-Isolier-Paneele und/oder der Putzträgerplatten in vielen Fällen zu Beschädigungen kommt, die nicht selten unbemerkt bleiben, so daß insgesamt eine Fassadendämmung mit einem vergleichsweise hohen Wärmeleitfähigkeitswert hergestellt wird, weil die belüfteten Vakuum-Isolier-Paneele keine zufriedenstellenden Dämmeigenschaften mehr haben.

In der DE 43 39 435 werden Dämmelemente beschrieben, bei denen ein Vakuum-Isolier-Paneel zwischen den Scheiben einer Isolier-Verglasung angeordnet ist. Derartige Dämmelemente sind allerdings auch nur eingeschränkt nutzbar und insbesondere für die Herstellung von Fassaden an Wohnhäusern ungeeignet.

Das Risiko der Beschädigung von Vakuum-Isolier-Paneelen ist auch in der WO 97/11842 angesprochen. Zur Lösung der daraus resultierenden Probleme wird in der genannten Schrift ein Dämmelementaufbau vorgeschlagen, bei dem der die Hauptflächen des Vakuum-Isolier-Paneels miteinander verbindende Rand dieses Paneels mit Hilfe eines diesen Rand umlaufenden Rahmens aus einem geschäumten Dämmaterial geschützt wird. In diesem Zusammenhang wird in der genannten Schrift auch vorgeschlagen, die Befestigung des Dämmelementes an der Fassade im Bereich des Rahmens zu bewirken und auch die zur Herstellung der Fassadendämmung benötigten Dämmelemente untereinander im Bereich des Rahmens miteinander zu verbinden. Ähnliche Konstruktionen sind auch in der WO 01/66864 A1 angegeben.

Bei Gebäuden, welche mit einer derartigen Wärmedämmung versehen sind, zeigen sich jedoch nach einiger Zeit optische Mängel derart, daß auf der auf den Dämmelementen aufgebrachten Putzschicht Verfärbungen auftreten, welche die Randkonturen der Dämmelemente wiedergeben.

Schließlich sind in der DE 100 39 141 A1 Dämmelemente der eingangs beschriebenen Art angegeben, bei denen das Vakuum-Isolier-Paneel beidseitig mit Platten belegt ist. Gemäß der Lehre dieser Schrift werden die so hergestellten Verbundelemente in ein Verankerungselement in Form eines aufgeschnittenen, flachen, quadratischen, rechteckigen oder rautenförmigen Hohlquaders eingesteckt und mit Hilfe des Verankerungselementes an der zu dämmenden Fassade befestigt. Es hat sich allerdings gezeigt, daß die Befestigung der bekannten Dämmelemente mit Hilfe der in der DE 100 39 141 A1 beschriebenen Verankerungselemente vergleichsweise aufwendig ist und in einigen Fällen zu einer unbefriedigenden Wärmedämmung führt.

Angesichts der vorstehend beschriebenen Probleme im Stand der Technik liegt der Erfindung die Aufgabe zugrunde, ein einfach an einer Fassade festlegbares Dämmelement mit guten Dämmeigenschaften bereitzustellen, welches eine Wärmedämmung ohne optische Beeinträchtigung der Fassade ermöglicht.

Erfindungsgemäß wird diese Aufgabe durch eine Weiterbildung der bekannten Dämmelemente gelöst, die im wesentlichen dadurch gekennzeichnet ist, daß in mindestens einem quer zu den Hauptflächen des Vakuum-Isolier-Paneels und vorzugsweise etwa parallel zur Dämmrichtung verlaufenden Rand der Dämmplatte eine sich quer, insbesondere etwa senkrecht zur Dämmrichtung erstreckende Profilierung zur Aufnahme eines Befestigungsabschnittes eines Befestigungselementes so gebildet ist, daß eine Projektion der Profilierung längs der Dämmrichtung zumindest abschnittweise auf einen Rand des Vakuum-Isolier-Paneels fällt. Mit anderen Worten ausgedrückt bedeutet das, daß die erfindungsgemäßen Dämmelemente so beschaffen sind, daß es eine parallel zur Dämmrichtung verlaufende und einen Rand des Vakuum-Isolier-Paneels durchsetzende Gerade gibt, welche auch die Profilierung durchsetzt.

Die erfindungsgemäßen Dämmelemente können besonders einfach an der zu dämmenden Fassade befestigt werden, indem sie auf den Befestigungsabschnitt eines zuvor an der Fassade befestigten Befestigungselementes aufgeschoben werden. Ferner macht die Erfindung von der Erkenntnis Gebrauch, daß die bei Einsatz von in der WO 97/11842 beschriebenen Dämmelementen beobachteten optischen Mängel darauf zurückzuführen sind, daß die in dieser Schrift beschriebenen bekannten Dämmelemente im Bereich des das Vakuum-Isolier-Paneel umlaufenden Rahmens eine höhere Wärmeleitfähigkeit aufweisen als im durch das Vakuum-Isolier-Paneel gebildeten Zentrum des Dämmelementes. Diese konstruktionsbedingten Wärmebrücken führen zu unterschiedlichen Oberflächentemperaturen der außenliegenden Putzschicht und damit auch zu einem im Bereich des Rahmens von der sonstigen Oberfläche des Dämmelementes abweichenden Verschmutzungsverhalten. Bei der erfindungsgemäßen Dämmelementkonstruktion können die Dämmelemente hingegen mit Befestigungsabschnitten an der Fassade befestigt werden, welche in Dämmrichtung betrachtet von einem Rand des Vakuum-Isolier-Paneels hinterlegt sind, so daß Schwankungen der Wärmeleitfähigkeit im Bereich des Dämmelementes nicht auftreten und daher auch keine optischen Beeinträchtigungen nach Montage der Dämmelemente beobachtet werden. Das ist darauf zurückzuführen, daß die zur Aufnahme des Befestigungsabschnittes der Befestigungselemente gedachte Profilierung so angeordnet ist, daß eine Projektion dieser Profilierung längs der Dämmrichtung zumindest abschnittweise auf einen Rand des Vakuum-Isolier-Paneels fällt, bzw. dadurch, daß es bei den erfindungsgemäßen Dämmelementen eine den Rand des Vakuum-Isolier-Paneels durchsetzende und parallel zur Dämmrichtung verlaufende Gerade gibt, welche auch die Profilierung bzw. den darin aufgenommenen Befestigungsabschnitt des Dämmelementes durchsetzt.

Die Profilierung in dem Rand der Dämmplatte des erfindungsgemäßen Dämmelementes ist vorzugsweise durch eine in einem sich etwa parallel zur Dämmrichtung erstrekkenden Rand vorgesehene, insbesondere gefräste, Nut und/oder Stufe gebildet. Dabei wird durch den Ausdruck "Stufe" im Sinne dieser Erfindung eine außenseitig offene Nut bezeichnet.

Bei einer besonders bevorzugten Ausführungsform der Erfindung ist auf beiden Hauptflächen des Vakuum-Isolier-Paneels mindestens eine Dämmplatte befestigt, insbesondere aufgeklebt. Dadurch kann auch auf der dem Untergrund zugewandten Seite des Vakuum-Isolier-Paneels eine Dämmplatte bereitgestellt werden, um so einen besseren Schutz der Vakuum-Isolier-Paneele zu gewährleisten. Die zur Herstellung erfindungsgemäßer Dämmelemente nach Art einer Sandwich-Platte verwendeten Dämmplatten können zumindest teilweise aus expandiertem Polystyrol, Mineralwolle, Steinlamelle und/oder Mineralschaum, wie z. B. in den Schriften DE 42 16 204, EP 0 816 303, DE 44 08 088, DE 43 39 137 und DE 43 27 074 beschrieben, bestehen.

Im Sinne des Erhalts einer besonders wirkungsvollen Wärmedämmung hat es sich als zweckmäßig erwiesen, wenn mindestens ein etwa parallel zur Dämmrichtung verlaufender Rand des Vakuum-Isolier-Paneels zumindest abschnittweise etwa koplanar zu mindestens einem parallel zur Dämmrichtung verlaufenden Rand der Dämmplatte verläuft. Dadurch kann sichergestellt werden, daß über die gesamte Dämmelementfläche ein wirksamer Teil des Vakuum-Isolier-Paneels zur Verfügung steht.

Im Sinne einer Reduzierung der Beschädigungsgefahr erfindungsgemäßer Dämmelemente hat es sich hingegen als zweckmäßig erwiesen, wenn mindestens eine Dämmplatte im Bereich mindestens eines parallel zur Dämmrichtung verlaufenden Randes zumindest abschnittweise einen Überstand von vorzugsweise 1-3 mm gegenüber dem Vakuum-Isolier-Paneel aufweist und der so gebildete Raum im Bereich des Vakuum-Isolier-Paneels mit einem Fugen-, Schaumstoffband oder dgl. Schutzmaterial ausgefüllt ist. Dadurch kann Beschädigungen im Bereich des Randes des Vakuum-Isolier-Paneels entgegengewirkt werden.

Eine weitere Sicherung des Vakuum-Isolier-Paneels ist möglich, wenn der die Hauptflächen dieses Paneels verbindende und üblicherweise etwa parallel zur Dämmrichtung verlaufende Rand des Vakuum-Isolier-Paneels zumindest abschnittweise mit einem Schutzbelag, insbesondere einem Klebe- und/oder Gewebeband oder dgl., vor Beschädigungen geschützt ist.

Gemäß einem einzeln oder in Kombination mit dem erläuterten Gesichtspunkt der Erfindung einsetzbaren weiteren Gesichtspunkt der Erfindung wird eine deutliche Reduzierung des Fertigungsaufwands für Vakuum-Isolier-Paneele aufweisende Dämmelemente dadurch erreicht, daß das Vakuum-Isolier-Paneel vorzugsweise allseitig mit einer pastösen Masse beschichtet wird. Eine derartige pastöse Masse läßt sich besonders einfach im Rahmen einer Massenfertigung mit Hilfe von Spritz- oder Tauchverfahren auf Vakuum-Isolier-Paneele aufbringen. Dabei kann eine im Hinblick auf die geringe Wärmeleitfähigkeit der Vakuum-Isolier-Paneele ausreichende und zur Vermeidung der beschriebenen Schießscharteneffekte gewünschte geringe Zunahme der Dicke der Vakuum-Isolier-Paneele erreicht werden, wenn die Schichtdicke der pastösen Masse auf dem Vakuum-Isolier-Paneel 10 mm oder weniger, vorzugsweise 5 mm oder weniger, besonders bevorzugt 2 mm oder weniger, insbesondere etwa 1,5 mm beträgt. Eine solch geringe Schichtdicke der pastösen Masse trägt zur Vermeidung der Schießscharteneffekte bei, reicht aber dennoch aus, um ansonsten Beschädigungen der Vakuum-Isolier-Paneele verursachende ggf. scharfkantige Unebenheiten des Untergrundes, auf dem die Dämmelemente aufzubringen sind, auszugleichen bzw. aufzunehmen. Wie vorstehend bereits erläutert, kann die Beschichtung mit der pastösen Masse durch ein Spritz- und/oder Tauchverfahren hergestellt werden. Dabei kann die pastöse Masse auf Basis einer wäßrigen Dispersion mit oder ohne Zementanteil formuliert sein. Zusätzlich oder alternativ kann die pastöse Masse eine Polyurethankomponente aufweisen, insbesondere auf Basis eines Zweikomponenten-Polyurethansystems formuliert sein. Dämmelemente gemäß diesem zweiten Gesichtspunkt der Erfindung können auch ohne Einsatz gesonderter Befestigungselemente an einer Fassade bzw. Wand befestigt, insbesondere geklebt werden.

Wie der vorstehenden Erläuterung erfindungsgemäßer Dämmelemente mit einem mit einer pastösen Masse beschichteten Vakuum-Isolier-Paneel zu entnehmen ist, können derartige Dämmelemente dadurch hergestellt werden, daß ein Vakuum-Isolier-Paneel vorzugsweise allseitig mit einer pastösen Masse beschichtet wird, wobei das Vakuum-Isolier-Paneel mit der pastösen Masse bespritzt und/oder in die pastöse Masse eingetaucht werden kann.

Wie der vorstehenden Erläuterung erfindungsgemäßer Dämmelemente zu entnehmen ist, umfaßt ein erfindungsgemäßes Wärmedämmsystem ein erfindungsgemäßes Dämmelement und mindestens ein zum Befestigen des Dämmelementes an einer Wand ausgelegtes Befestigungselement. Als besonders zweckmäßig hat es sich erwiesen, wenn das Befestigungselement mindestens einen etwa senkrecht zur Dämmrichtung und etwa parallel zur zu dämmenden Wand verlaufenden und an die Wand anlegbaren Anlageabschnitt und mindestens einen in die Profilierung der Dämmplatte einführbaren Befestigungsabschnitt aufweist. Dabei können sich der Anlageabschnitt und der Befestigungsabschnitt in parallel zueinander verlaufenden Ebenen erstrecken.

Zur Herstellung einer vollflächigen Dämmung einer Wand hat es sich als besonders günstig erwiesen, wenn das Befestigungselement zwei in Profilierungen benachbarter Dämmelemente einführbare Befestigungsabschnitte aufweist, wobei diese Befestigungsabschnitte zweckmäßigerweise in einer sich etwa parallel zur zu dämmenden Wand und zum Anlageabschnitt erstreckenden Ebene verlaufen.

Zum Schutz des Vakuum-Isolier-Paneels erfindungsgemäßer Dämmelemente werden diese Dämmelemente zweckmäßigerweise so an der Wand angebracht, daß das Vakuum-Isolier-Paneel zwischen dem durch die Wand gebildeten Untergrund und der Dämmplatte angeordnet ist. In diesem Zusammenhang hat es sich als günstig erwiesen, wenn das Befestigungselement einen zwischen dem Anlageabschnitt und dem mindestens einen Befestigungsabschnitt angeordneten und vorzugsweise etwa senkrecht zu diesen Abschnitten verlaufenden Verbindungsabschnitt aufweist, wobei mit dem Verbindungsabschnitt zwischen dem Anlageabschnitt und dem Befestigungsabschnitt ein nach Einführen des Befestigungsabschnittes in die Profilierung noch zur Aufnahme eines Randbereiches des Vakuum-Isolier-Paneels ausreichender Raum gebildet wird. Eine derartige Ausführung der Befestigungselemente erlaubt ein Aufschieben erfindungsgemäßer Wärmedämmelemente auf den Befestigungsabschnitt derart, daß das Vakuum-Isolier-Paneel zwischen dem durch die Wand gebildeten Untergrund der Dämmplatte angeordnet ist.

Ein weiterer verbesserter Schutz erfindungsgemäßer Dämmelemente und insbesondere der Vakuum-Isolier-Paneele erfindungsgemäßer Dämmelemente ist erreichbar, wenn der zwischen dem Befestigungsabschnitt und dem Anlageabschnitt gebildete Raum nach Einführen des Befestigungsabschnittes in die Profilierung zur Aufnahme eines Randbereiches einer an der der Wand zugewandten Hauptfläche des Vakuum-Isolier-Paneels befestigten Dämmplatte ausreicht. Dann kann das Vakuum-Isolier-Paneel sowohl wandseitig als auch außenseitig vor Beschädigungen geschützt werden. Ein weiterer Schutz kann, wie vorstehend erläutert, mit Hilfe einer den Rand des Vakuum-Isolier-Paneels zumindest abschnittweise umlaufenden Schutzbeschichtung in Form eines Fugen-, Schaumstoff- und/oder Gewebebandes erreicht werden.

Mit Hilfe der Befestigungselemente erfindungsgemäßer Wärmedämmsysteme kann üblicherweise eine ausreichende Befestigung der Dämmelemente an der Wand erreicht werden. In einigen Fällen kann es jedoch notwendig sein, daß das Dämmelement mit einem zusätzlichen Klebepunkt, vorzugsweise bestehend aus einem zum Verkleben von Dämmplatten geeigneten Kleber, an der Wand befestigt ist.

Im Sinne einer einfachen Verarbeitung und aus Kostengründen hat es sich als günstig erwiesen, wenn das Befestigungselement aus Kunststoff und/oder Aluminium besteht.

Im Rahmen der Erfindung ist auch daran gedacht, die der Wand abgewandte Begrenzungsfläche des Dämmelementes, welche üblicherweise von der Dämmplatte gebildet wird, mit einem zusätzlichen Element, wie etwa einer Glasscheibe, Keramikplatte und/oder Naturstein zu beschichten.

Im Rahmen der Erfindung ist auch daran gedacht, die Dämmelemente mit Hilfe von in die Profilierungen eingesetzten Verbindungsleisten mechanisch miteinander zu verbinden, um so in Dämmrichtung bzw. entgegengesetzt dazu wirkende Kräfte, wie z. B. Windsoglasten, auf die gesamte gedämmte Fläche zu übertragen.

Nachstehend wird die Erfindung unter Bezugnahme auf die Zeichnung, auf die hinsichtlich aller erfindungswesentlichen und in der Beschreibung nicht näher herausgestellten Einzelheiten ausdrücklich verwiesen wird, erläutert. In der Zeichnung zeigt:
- Fig. 1: eine parallel zur Dämmrichtung geführte Schnittdarstellung einer ersten Ausführungsform eines erfindungsgemäßen Wärmedämmsystems,
- Fig. 2: eine parallel zur Dämmrichtung geführte Schnittdarstellung einer zweiten Ausführungsform eines erfindungsgemäßen Wärmedämmsystems und
- Fig. 3: eine parallel zur Dämmrichtung geführte Schnittdarstellung einer dritten Ausführungsform eines erfindungsgemäßen Wärmedämmsystems.

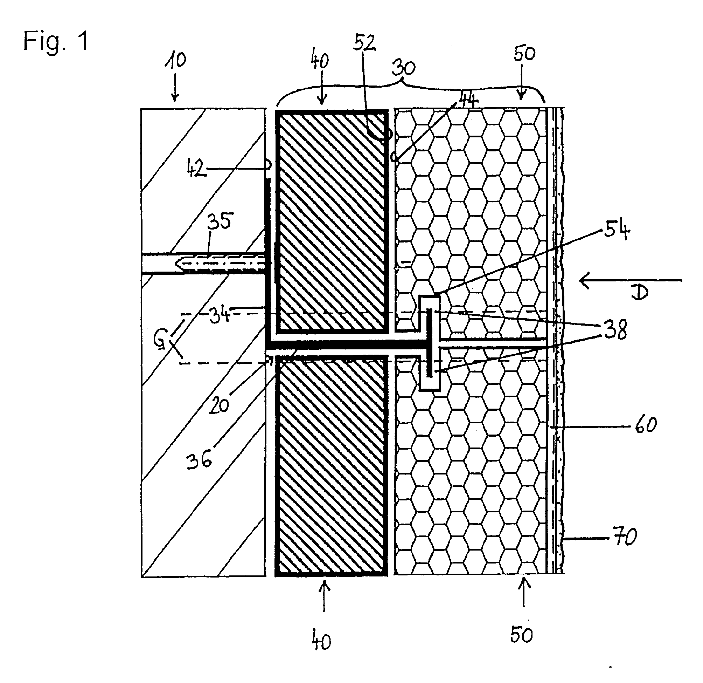

Die in Fig. 1 dargestellte Ausführungsform der Erfindung umfaßt mit einem Befestigungselement 20 an einer Wand 10 festgelegte Dämmelemente 30. Dabei weisen die Dämmelemente 30 in Dämmrichtung D betrachtet eine aus einem Dämmstoff gebildete Dämmplatte 50 und ein Vakuum-Isolier-Paneel 40 auf. Eine innere Hauptfläche 42 der Vakuum-Isolier-Paneele verläuft etwa parallel zur Oberfläche der Wand 10 und senkrecht zur Dämmrichtung D. Auf der der Wand 10 abgewandten und etwa senkrecht zur Dämmrichtung D verlaufenden Hauptfläche 44 der Vakuum-Isolier-Paneele 40 ist die Dämmplatte 50 befestigt.

Die zur Befestigung der Dämmelemente 30 an der Wand 10 dienenden Befestigungselemente 20 umfassen einen etwa parallel zur Außenfläche der Wand 10 verlaufenden und an dieser anliegenden Anlageabschnitt 34, einen etwa parallel zur Dämmrichtung D verlaufenden Verbindungsabschnitt 36 sowie zwei etwa senkrecht zur Dämmrichtung D verlaufende Befestigungsabschnitte 38. Der Anlageabschnitt 34 ist mit Hilfe einer ihn durchsetzenden Schraube 35 an der Wand 10 festgelegt. Die Befestigungsabschnitte 38 sind in der in Fig. 1 dargestellten montierten Stellung in durch Nuten 54 gebildete Profilierungen in der Dämmplatte 50 aufgenommen. Diese Nuten 54 sind in einen die Dämmplatten 50 umlaufenden Rand in einer etwa senkrecht zur Dämmrichtung D verlaufenden Richtung eingefräst. Dabei ist die Form und Lage der Nuten 54 so gewählt, daß eine Projektion der durch die Nuten 38 gebildeten Profilierung längs der Dämmrichtung auf einen Rand des Vakuum-Isolier-Paneels 40 fällt bzw. so, daß es für jedes der Dämmelemente 30 eine sich parallel zur Dämmrichtung D erstreckende Gerade G gibt, welche sowohl die Profilierung als auch das Vakuum-Isolier-Paneel durchsetzt.

Wie in Fig. 1 erkennbar, ist zwischen dem Anlageabschnitt 34 und dem Befestigungsabschnitt 38 ein durch den Verbindungsabschnitt 36 bestimmter Raum gebildet, in dem sowohl ein äußerer Rand des Vakuum-Isolier-Paneels als auch ein Teil des äußeren Randes der Dämmplatte aufgenommen ist.

Auf der äußeren Begrenzungsfläche der Dämmplatte 50 ist ein mit Textilglasgittergewebe bewährter Unterputz 60 und ein Oberputz 70 aufgebracht.

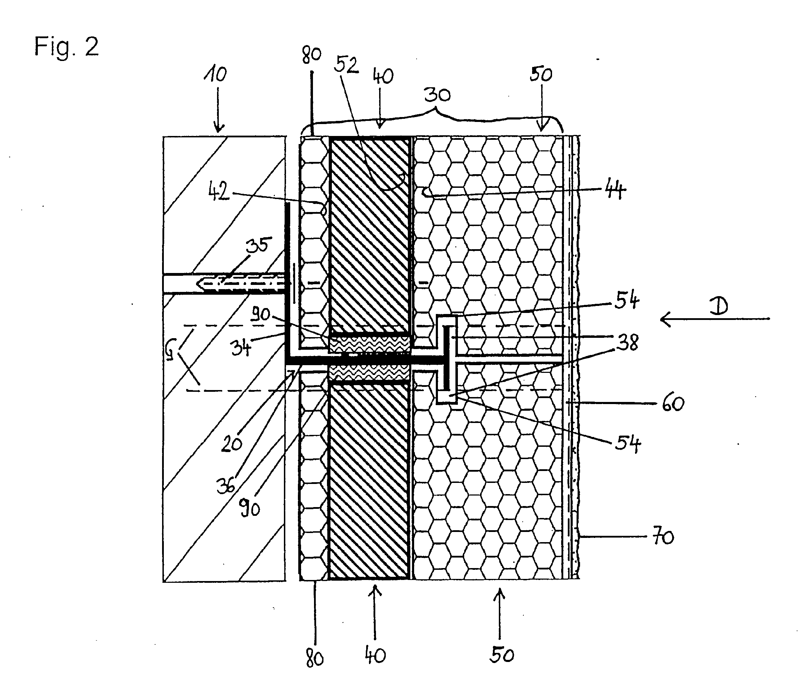

Zur Erläuterung der in Fig. 2 dargestellten Ausführungsform der Erfindung werden für solche Elemente, welche anhand der Fig. 1 bereits erläutert wurden, die selben Bezugszeichen verwendet wie bei der Erläuterung der in Fig. 1 dargestellten Ausführungsform der Erfindung.

Die in Fig. 2 dargestellte Ausführungsform der Erfindung unterscheidet sich im wesentlichen dadurch von der anhand der Fig. 1 erläuterten Ausführungsform, daß an der der Wand 10 zugewandten inneren Hauptfläche 42 des Vakuum-Isolier-Paneels eine zusätzliche Dämmplatte 80 befestigt ist und daß die Dämmplatten einen geringen Überstand von etwa 1-3 mm gegenüber den Vakuum-Isolier-Paneelen aufweisen und der freiliegende Randbereich der Vakuum-Isolier-Paneele mit einem Fugen- bzw. Schaumstoffband 90 ausgefüllt ist. Die an der inneren Hauptfläche der Vakuum-Isolier-Paneele festgelegte Dämmplatte besteht aus expandiertem Polystyrol und ist vergleichsweise dünn ausgeführt. Die Dicke dieser inneren Dämmplatte 80 beträgt etwa 10 mm.

Der zwischen den Befestigungsabschnitten 38 und dem Anlageabschnitt 34 des Befestigungselementes 20 gebildete Raum ist bei der in Fig. 2 dargestellten Ausführungsform so gebildet, daß darin ein äußerer Rand der Vakuum-Isolier-Paneele 40, ein äußerer Rand der an der inneren Begrenzungsfläche dieser Paneele befestigten Dämmplatten 80 und ein innenliegender Abschnitt des äußeren Randes der Dämmplatte 50 aufgenommen werden kann. Auch bei der in Fig. 2 dargestellten Ausführungsform der Erfindung ist die Form und Lage der durch Nuten 54 gebildeten Profilierung der äußeren Dämmplatte 50 so gewählt, daß eine Projektion dieser Profilierung längs der Dämmrichtung D auf einen äußeren Rand der Vakuum-Isolier-Paneele fällt bzw. so, daß es für jedes der Dämmelemente 30 eine Gerade G gibt, welche sowohl den äußeren Rand der Vakuum-Isolier-Paneele 40 als auch die durch die Nuten 54 gebildete Profilierung durchsetzt.

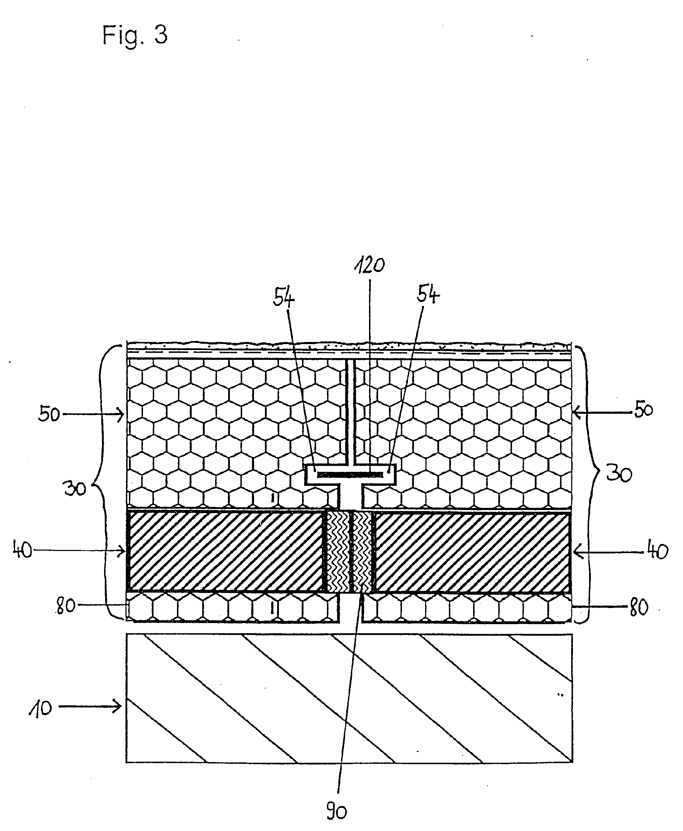

Bei der in Fig. 3 dargestellten Ausführungsform sind Dämmelemente der anhand der Fig. 2 erläuterten Art mit Hilfe von Verbindungsleisten 120 mechanisch miteinander verbunden. Die Verbindungsleiste 120 ist in die durch die Nuten 54 gebildete Profilierung eingesetzt. Durch diese mechanische Verbindung können in Dämmrichtung bzw. entgegengesetzt dazu wirkende Kräfte, wie etwa Windsoglasten, über die gesamte gedämmte Fläche verteilt werden.

Die Erfindung ist nicht auf die anhand der Zeichnung erläuterten Ausführungsformen beschränkt. Vielmehr ist auch an solche Ausführungsformen gedacht, bei denen die Profilierung in Form einer nach außen offenen Stufe gebildet ist. Darüber hinaus können anstelle des Fugen- oder Schaumstoffbandes andere Schutzschichten auf den äußeren Rand der Vakuum-Isolier-Paneele aufgebracht sein. Darüber hinaus können die Befestigungselemente auch in Form einfacher U-Profile gebildet sein und/oder Eckprofile aufweisen. Die Befestigung der Dämmelemente 30 kann zusätzlich auch durch Klebepunkte an der inneren Begrenzungsfläche der Dämmelemente bewirkt werden.

## Patentansprüche

1. Dämmelement (30) zum Bereitstellen einer Dämmwirkung in einer Dämmrichtung (D) mit einem von zwei etwa senkrecht zur Dämmrichtung (D) verlaufenden Hauptflächen (42, 44) begrenzten Vakuum-Isolier-Paneel und mindestens einer auf einer der Hauptflächen (42, 44) des Vakuum-Isolier-Paneels befestigten, insbesondere aufgeklebten und im wesentlichen aus einem Dämmstoff bestehenden Dämmplatte (50), **dadurch gekennzeichnet, daß** in mindestens einem quer zu den Hauptflächen (42, 44) des Vakuum-Isolier-Paneels (40) und vorzugsweise etwa parallel zur Dämmrichtung (D) verlaufenden Rand der Dämmplatte (50) eine sich quer, insbesondere etwa senkrecht zur Dämmrichtung (D) erstreckende Profilierung (54) zur Aufnahme eines Befestigungsabschnittes (38) eines Befestigungselementes (20) so gebildet ist, daß eine Projektion der Profilierung (38) längs der Dämmrichtung (D) zumindest abschnittweise auf einen Rand des Vakuum-Isolier-Paneels (40) fällt.

2. Dämmelement nach Anspruch 1, **dadurch gekennzeichnet, daß** die Profilierung (38) durch eine in einem sich etwa parallel zur Dämmrichtung (D) erstreckenden Rand vorgesehene, insbesondere gefräste Nut und/oder Stufe gebildet ist.

3. Dämmelement nach Anspruch 1, **dadurch gekennzeichnet, daß** auf beiden Hauptflächen (42, 44) des Vakuum-Isolier-Paneels (40) mindestens eine Dämmplatte (50, 80) befestigt, insbesondere aufgeklebt ist.

4. Dämmelement nach einem der vorhergehenden Ansprüche, **dadurch gekennzeichnet, daß** mindestens eine der Dämmplatten (80) zumindest teilweise aus expandiertem Polystyrol, Mineralwolle, Steinlamelle und/oder Mineralschaum besteht.

5. Dämmelement nach einem der vorhergehenden Ansprüche, **dadurch gekennzeichnet, daß** mindestens ein etwa parallel zur Dämmrichtung (D) verlaufender Rand des Vakuum-Isolier-Paneels (40) zumindest abschnittweise etwa koplanar zu mindestens einem etwa parallel zur Dämmrichtung (D) verlaufenden Rand der Dämmplatte (50, 80) verläuft.

6. Dämmelement nach einem der vorhergehenden Ansprüche, **dadurch gekennzeichnet, daß** mindestens eine Dämmplatte (50, 80) im Bereich mindestens eines etwa parallel zur Dämmrichtung (D) verlaufenden Randes zumindest abschnittweise einen Überstand von vorzugsweise 1-3 mm gegenüber dem Vakuum-Isolier-Paneel (40) aufweist und der so gebildete Raum im Bereich des Vakuum-Isolier-Paneels (40) mit einem Fugen-, Schaumstoffband (90) oder dgl. ausgefüllt ist.

7. Dämmelement nach einem der vorhergehenden Ansprüche, **dadurch gekennzeichnet, daß** der die Hauptflächen (42, 44) des Vakuum-Isolier-Paneels (40) verbindende und üblicherweise etwa parallel zur Dämmrichtung (D) verlaufende Rand des Vakuum-Isolier-Paneels (40) zumindest abschnittweise mit einem Schutzbelag, insbesondere einem Klebe- und/oder Gewebeband, vor Beschädigungen geschützt ist.

8. Dämmelement, insbesondere nach einem der vorhergehenden Ansprüche, **dadurch gekennzeichnet, daß** das Vakuum-Isolier-Paneel vorzugsweise allseitig mit einer pastösen Masse beschichtet ist.

9. Dämmelement nach Anspruch 8, **dadurch gekennzeichnet, daß** die Schichtdicke der pastösen Masse auf dem Vakuum-Isolier-Paneel 10 mm oder weniger, vorzugsweise 5 mm oder weniger, besonders bevorzugt 2 mm oder weniger, insbesondere etwa 1,5 mm beträgt.

10. Dämmelement nach Anspruch 8 oder 9, **dadurch gekennzeichnet, daß** die Beschichtung mit der pastösen Masse hergestellt ist durch ein Spritz- und/oder Tauchverfahren.

11. Dämmelement nach einem der Ansprüche 8 bis 10, **dadurch gekennzeichnet, daß** die pastöse Masse auf Basis einer wäßrigen Dispersion formuliert ist.

12. Dämmelement nach Anspruch 11, **dadurch gekennzeichnet, daß** die wäßrige Emulsion einen Zementanteil aufweist.

13. Dämmelement nach einem der Ansprüche 8 bis 12, **dadurch gekennzeichnet, daß** die pastöse Masse eine Polyurethankomponente aufweist, insbesondere auf Basis eines Zweikomponenten-Polyurethansystems formuliert ist.

14. Wärmedämmsystem mit einem Dämmelement (30) nach einem der vorhergehenden Ansprüche und mindestens einem zum Befestigen des Dämmelementes (30) an einer Wand (10) ausgelegten Befestigungselement (20).

15. Wärmedämmsystem nach Anspruch 14, **dadurch gekennzeichnet, daß** das Befestigungselement (20) mindestens einen etwa senkrecht zur Dämmrichtung (D) verlaufenden und an die Wand (10) anlegbaren Anlageabschnitt (34) und mindestens einen in die Profilierung (54) der Dämmplatte (50) einführbaren Befestigungsabschnitt (54) aufweist.

16. Wärmedämmsystem nach Anspruch 15, **dadurch gekennzeichnet, daß** das Befestigungselement (20) zwei in Profilierungen (54) benachbarter Dämmplatten (50) einführbare Befestigungsabschnitte (38) aufweist.

17. Wärmedämmsystem nach Anspruch 15 oder 16, **dadurch gekennzeichnet, daß** das Befestigungselement (20) einen zwischen dem Anlageabschnitt (34) und dem mindestens einen Befestigungsabschnitt (38) angeordneten und vorzugsweise etwa parallel zur Dämmrichtung (D) verlaufenden Verbindungsabschnitt (36) aufweist, wobei mit dem Verbindungsabschnitt (36) zwischen dem Anlageabschnitt (34) und dem Befestigungsabschnitt (38) ein nach Einführen des Befestigungsabschnittes (38) in die Profilierung (54) noch zur Aufnahme eines Randbereiches des Vakuum-Isolier-Paneels (40) ausreichender Raum gebildet ist.

18. Wärmedämmsystem nach Anspruch 17, **dadurch gekennzeichnet, daß** der zwischen Befestigungsabschnitt (38) und Anlageabschnitt (34) gebildete Raum nach Einführen des Befestigungsabschnittes (38) in die Profilierung (54) zur Aufnahme eines Randbereiches einer an der der Wand (10) zugewandten Hauptfläche (42) des Vakuum-Isolier-Paneels (40) befestigten Dämmplatte (80) ausreicht.

19. Wärmedämmsystem nach einem der Ansprüche 14 bis 18, **dadurch gekennzeichnet, daß** das Dämmelement (30) mit mindestens einem zusätzlichen Klebepunkt, bestehend aus einem zum Verkleben von Dämmplatten geeigneten Kleber, an der Wand (10) befestigt ist.

20. Wärmedämmsystem nach einem der Ansprüche 14 bis 19, **dadurch gekennzeichnet, daß** das Befestigungselement (20) aus Kunststoff und/oder Aluminium besteht.

21. Wärmedämmsystem nach einem der Ansprüche 14 bis 20, **dadurch gekennzeichnet, daß** die der Wand abgewandte Begrenzungsfläche des Dämmelementes (30) mit einem zusätzlichen Element, wie etwa einer Glasscheibe, Keramikplatte und/oder Naturstein beschichtet ist.

22. Wärmedämmsystem insbesondere nach einem der Ansprüche 14 bis 20 mit einem Dämmelement (30) nach einem der Ansprüche 1 bis 7 und mindestens einem in die Profilierung benachbarter Dämmelemente eingesetzten Verbindungselement (120).

23. Wärmedämmsystem, insbesondere nach einem der Ansprüche 14 bis 22, **dadurch gekennzeichnet, daß** ein Dämmelement ggf. ohne Einsatz gesonderter Befestigungselemente auf einer Wand befestigt, insbesondere aufgeklebt ist.

24. Verfahren zum Herstellen eines Dämmelementes nach einem der Ansprüche 8 bis 13, **dadurch gekennzeichnet, daß** ein Vakuum-Isolier-Paneel vorzugsweise allseitig mit einer pastösen Masse beschichtet wird.

25. Verfahren nach Anspruch 23, **dadurch gekennzeichnet, daß** das Vakuum-Isolier-Paneel mit der pastösen Masse bespritzt und/oder in die pastöse Masse eingetaucht wird.
